# EUROPEAN PATENT SPECIFICATION

(11) **EP 4 257 347 B1**
(45) Date of publication and mention of the grant of the patent: **10.12.2025**
(21) Application number: 23165559.8
(22) Date of filing: 30.03.2023
(51) Int. Cl.: B29D 99/00, B29C 70/46

(54) **COMPOSITE PART WITH CROSSBEAM SUPPORTS AND METHODS OF FORMING COMPOSITE PARTS**
VERBUNDTEIL MIT QUERTRÄGERSTÜTZEN UND VERFAHREN ZUR HERSTELLUNG VON VERBUNDTEILEN
PIÈCE COMPOSITE AVEC SUPPORTS DE TRAVERSE ET PROCÉDÉS DE FORMATION DE PIÈCES COMPOSITES

(30) Priority: 09.04.2022 US 202217717056
(43) Date of publication of application: 11.10.2023
(73) Proprietor: Rohr, Inc., Chula Vista, CA 91910-2098 (US)
(72) Inventor: COX, Jared D., Santee 92071 (US); LEMMERS, Patrick L., San Diego 92123 (US); BENSON, Jennifer, Jamul 91935 (US); DE JESUS, Andre, San Diego 92128 (US)
(74) Representative: Dehns

(56) References cited:
- EP-A1- 2 947 001
- EP-A2- 1 459 873
- WO-A1-99/04964
- JP-A- H02 155 633
- US-A- 4 223 053
- US-A- 5 332 178

## Description

### FIELD

The present disclosure relates generally to systems and methods for forming composite parts, and more specifically to systems and methods for forming composite flight control surfaces for aircraft.

### BACKGROUND

Aircraft are typically equipped with control surfaces to maneuver the aircraft during flight as well as high lift surfaces to increase lift at low airspeed. The control surfaces are typically hingedly attached to wings, horizontal stabilizers, and/or vertical stabilizers. The horizontal and vertical stabilizers are collectively referred to as the empennage. As the control surfaces are rotated with respect to the wings or empennage, air flow is deflected and causes the attitude and/or flight path of the aircraft to change. Based on the locations and relative rotation directions of the control surfaces, the aircraft may slow, ascend, descend, roll, and/or turn.

The control surfaces are typically airfoil-like components configured to alter the flow of air about the wings or empennage. As such, an individual control surface generally has a leading edge, a trailing edge, a pressure side and a suction side. Control surfaces or the airfoil-like component thereof, must possess sufficient structural integrity to withstand the forces applied to it during use over the operational life of the aircraft. Resin Pressure Molding (RPM) may be used to form structures from composite materials. Airfoil-like components formed using RPM generally rely on the skins of the structure (e.g., the outer structures) to transmit load and provide stiffness in fore and aft direction.

JP H02155633 A and US 5332178 A disclose prior art methods for forming composite parts. In particular, JP H02155633 discloses a method for forming a stiffening structure assembly for making a fiber-reinforced control surface, comprising forming a plurality of fiber-mandrel sections; wherein forming the plurality of fiber-mandrel sections comprises forming a first fiber-mandrel section, wherein forming the first fiber-mandrel section comprises depositing a first inner fiber ply around a perimeter of a first mandrel; forming a second fiber-mandrel section, wherein forming the second fiber-mandrel section comprises depositing a second inner fiber ply around a perimeter of a second mandrel;forming a third fiber-mandrel section, wherein forming the third fiber-mandrel section comprises depositing a third inner fiber ply around a perimeter of a third mandrel; and forming a fourth fiber-mandrel section, wherein forming the fourth fiber-mandrel section comprises depositing a fourth inner fiber ply around a perimeter of a fourth mandrel; stacking the plurality of fiber-mandrel sections to form a fiber-mandrel assembly and depositing an outer fiber ply around a perimeter of the fiber-mandrel assembly.

### SUMMARY

In a first aspect of the invention, a method for forming a stiffening structure assembly for making a fiber-reinforced control surface is disclosed according to claim 1.

In various embodiments, each of the first mandrel, the second mandrel, the third mandrel, and the fourth mandrel may have a triangular prism shape.

In various embodiments, the method may further comprise locating a fiber bundle in a void formed between a first apex of the first fiber-mandrel section, a second apex of the second fiber-mandrel section, a third apex of the third fiber-mandrel section, and a fourth apex of the fourth fiber-mandrel section.

In various embodiments, at least one of a first height or a first width of the first mandrel as measured at a first mandrel face of the first mandrel may be less than a second height or a second width of the first mandrel as measured at a second mandrel face of the first mandrel.

In another aspect of the invention, a method for forming a fiber-reinforced control surface is also disclosed according to claim 4.

In various embodiments, the method may further comprise removing the first mandrel, the second mandrel, the third mandrel, and the fourth mandrel from each stiffening structure assembly of the plurality of stiffening structure assemblies after curing the part layup.

In various embodiments, curing the part layup by applying heat and pressure to the part layup may comprise crosslinking a first resin of the first fiber-mandrel section with a second resin of the second fiber-mandrel section and a third resin of the third fiber-mandrel section, crosslinking the second resin of the second fiber-mandrel section with a fourth resin of the fourth fiber-mandrel section, and crosslinking the fourth resin of the fourth fiber-mandrel section with the resin of the third fiber-mandrel section.

In various embodiments, curing the part layup by applying heat and pressure to the part layup comprises heating the part layup to a temperature sufficient to consolidate a first thermoset resin of the first fiber ply with a second thermoset resin of the plurality of stiffening structure assemblies and to consolidate the second thermoset resin of the plurality of stiffening structure assemblies with a third thermoset resin of the second fiber ply.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a perspective view of an aircraft having a variety of control surfaces distributed about the wings and tail structure, in accordance with various embodiments;
FIG. 2A illustrates a partial isometric view of an exemplary control surface, in accordance with various embodiments;
FIG. 2B illustrates a cross-section view of a portion of the control surface of FIG. 2A, in accordance with various embodiments;
FIG. 3 illustrates a method of forming a fiber-reinforced control surface having stiffening structures, in accordance with various embodiments;
FIG. 4 illustrates a part layup including a plurality of stiffening structure assemblies located in a mold tool, in accordance with various embodiments;
FIGs. 5A and 5B illustrate a perspective view and a cross-section view, respectively, of a stiffening structure assembly, in accordance with various embodiments;
FIG. 6 illustrates a perspective view of a mandrel for a stiffening structure assembly, in accordance with various embodiments;
FIG. 7 illustrates a method of forming a stiffening structure assembly, in accordance with various embodiments;
FIGs. 8A and 8B illustrate a perspective view and a cross-section view, respectively, of a fiber-mandrel section of a stiffening structure assembly, in accordance with various embodiments;
FIGs. 8C and 8D illustrate a perspective view and a cross-section view, respectively, of a fiber-mandrel assembly of a stiffening structure assembly, in accordance with various embodiments; and
FIGs. 8E and 8F illustrate a perspective view and a cross-section view, respectively, of a stiffening structure assembly, in accordance with various embodiments;

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not for limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Surface shading lines may be used throughout the figures to denote different parts but not necessarily to denote the same or different materials.

In general, the example control surfaces described herein may be used with aircraft wings, stabilizers, or elevators, among other aerodynamic surfaces of an aircraft. Some examples of common names for these surfaces known to those practiced in the arts include but are not limited to flaps, ailerons, rudders, elevators, stabilators, elevons, spoilers, lift dumpers, speed brakes, airbrakes, trim tabs, slats, flaperons, spoilerons, and canards. These are henceforth referred to as control surfaces. In general, control surfaces may direct air flow during maneuvering and in-flight aircraft attitude adjustments. The example control surfaces described herein include stiffening structures extending between the skins. The stiffening structures may thus increase the stiffness and/or the torsional strength and/or may resist greater loads in the fore and aft directions.

A control surface, as described herein, includes a structural body comprising one or more stiffening structure(s) and skin members, wherein the stiffening structures are sandwiched between the skin members. In various embodiments, the skin members include a fiber reinforced material comprised of fiber/fabric and a resin (e.g., a thermoset resin). In various embodiments, the stiffening structures include a fiber reinforced material comprised of fiber/fabric and a resin (e.g., a thermoset resin). The reinforcing fiber used for the control surface has no particular limitations with respect to the type thereof, and examples thereof include metal fibers (e.g., aluminum fiber, brass fiber, copper fiber, etc.) carbon fibers, including graphite fibers (e.g., polyacrylonitrile (PAN)-based carbon fibers, rayon-based carbon fibers, lignin-based carbon fibers, and pitch-based carbon fibers), insulating fibers (e.g., glass fiber), organic fibers (e.g., aramid fibers, polyparaphenylene benzoxazole (PBO) fibers, polyphenylene sulfide fibers, polyester fibers, acrylic fibers, nylon fibers, and polyethylene fibers), and inorganic fibers (e.g., silicon carbide fibers and silicon nitride fibers). Fibers prepared by applying surface treatment to these fibers are also available. Examples of the surface treatment for fibers include treatment with a coupling agent, treatment with a sizing agent, treatment with a binder, and adhesion treatment with an additive in addition to deposition treatment with conductive metal. The thermoset resin may include a phenolic, methyl methacrryklate, epoxy, polyurethane, polyester, and/or any other suitable thermoset resin. To form the stiffening structure(s) and skin members, the fiber reinforced materials may be deposited using any suitable deposition method (e.g., hand layup, automated fiber placement (AFP), etc.).

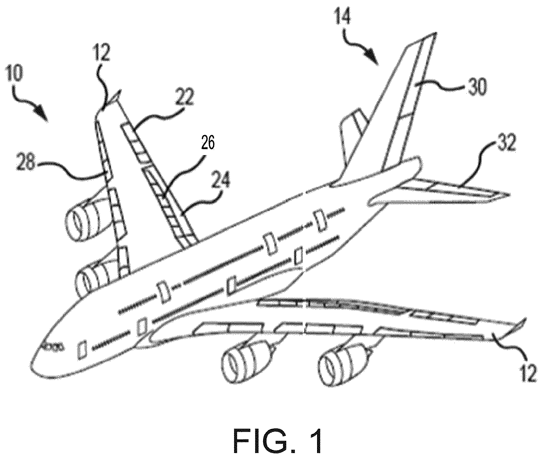

With reference to FIG. 1, an aircraft 10 having a variety of control surfaces disposed about the wings 12 and the tail section 14 of the aircraft is illustrated. The variety of control surfaces typically used on the wings 12 of the aircraft 10 may include, for example, an aileron 22, a trailing edge flap 24, a spoiler 26, disposed adjacent to and forward of the trailing edge flap 24, and a leading edge slat 28. Similarly, the variety of control surfaces typically used on the tail section 14 of the aircraft 10 may include, for example, a rudder 30 and an elevator 32.

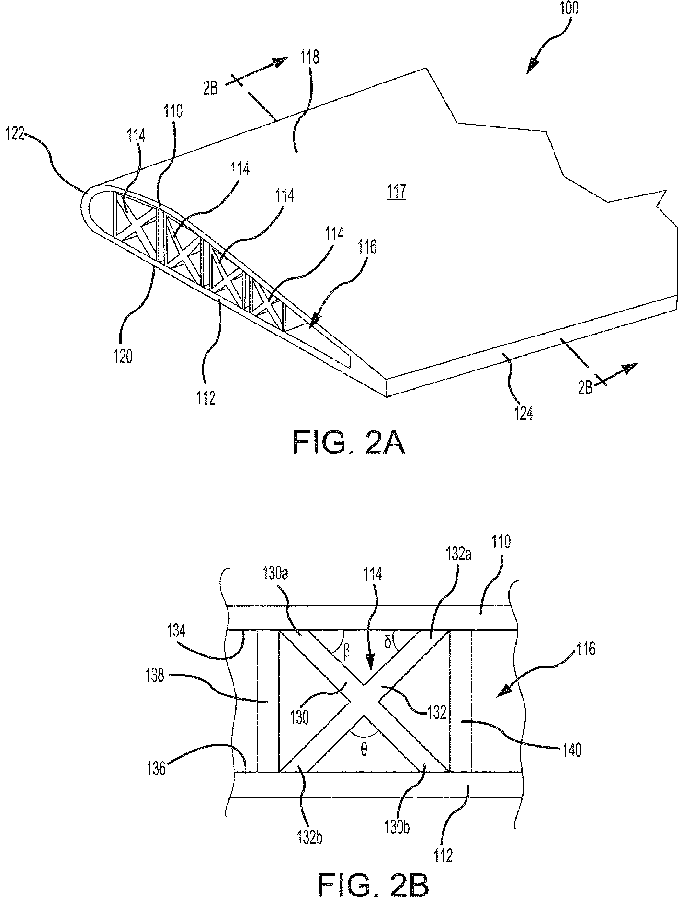

With reference to FIG. 2A, a perspective view of a control surface 100 is illustrated in accordance with various embodiments. Control surface 100 may be employed as any of the control surfaces of aircraft 10 in FIG. 1 (e.g., control surface may be an aileron 22, a trailing edge flap 24, a spoiler 26, a leading edge slat 28, a rudder 30, an elevator 32). In various embodiments, control surface 100 may be a stabilator.

In accordance with various embodiments, the control surface 100 comprises a first skin 110, a second skin 112, and one or more stiffening structure(s) 114 located between first skin 110 and second skin 112. Stated differently, a chamber 116 may be formed between/defined by the first skin 110 and the second skin 112, and the stiffening structures 114 may be located in the chamber 116. Although illustrated as including four stiffening structures 114, any number of stiffening structures 114 may be utilized to form the control surface 100, in accordance with various embodiments. The first skin 110 and the second skin 112 may define an outer airfoil surface 117. In this regard, first skin 110 may form a suction side 118 of control surface 100, second skin 112 may form a pressure side 120 of control surface 100, and first skin 110 may be joined with second skin 112 at a leading edge 122 and at a trailing edge 124 of control surface 100.

With reference to FIG. 2B, additional details of a stiffening structure 114 are illustrated. In accordance with various embodiments, stiffening structure 114 may include a first leg 130 and a second leg 132. Each of first leg 130 and second leg 132 extends between the first skin 110 and the second skin 112. In various embodiments, first leg 130 may be approximately perpendicular to second leg 132. In this regard, an angle theta (θ) formed between the adjacent surfaces of first leg 130 and second leg 132 may be approximately 90°. As used in the previous context only, the term "approximately" means ± 5°. In accordance with various embodiments, first leg 130 and second leg 132 are each oriented at non-normal angles relative to the first interior surface 134 of first skin 110 and the second interior surface 136 of second skin 112. For example, first leg 130 may oriented at an angle beta (β) relative to first interior surface 134 of first skin 110. Angle beta may be formed between first interior surface 134 and the surface of first leg 130 that is adjacent to first interior surface 134. Angle beta may be between 15° and 75°, between 30° and 60°, and/or about 45°. As used in the previous context only, the term "about" means ± 5°. Second leg 132 may oriented at an angle delta (δ) relative to first interior surface 134 of first skin 110. Angle delta may be formed between first interior surface 134 and the surface of second leg 132 that is adjacent to first interior surface 134. Angle delta may be between 15° and 75°, between 30° and 60°, and/or about 45°. As used in the previous context only, the term "about" means ± 5°.

In accordance with various embodiments, stiffening structure 114 further includes a first orthogonal leg 138 and a second orthogonal leg 140. First orthogonal leg 138 extends between a first end 130a of first leg 130 and a second end 132b of second leg 132. Second orthogonal leg 140 extends between a first end 132a of second leg 132 and a second end 130b of first leg 130. First end 130a of first leg 130 and first end 132a of second leg 132 are each located at the first interior surface 134 of first skin 110. Second end 130b of first leg 130 and second end 132b of second leg 132 are each located at second interior surface 136 of second skin 112.

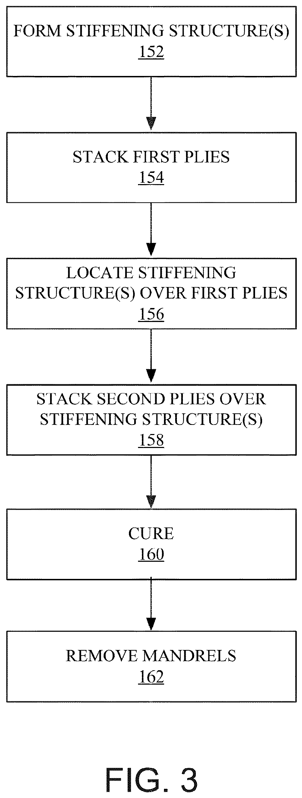

With reference to FIG. 3, a method 150 for manufacturing a control surface is provided, in accordance with various embodiments. Method 150 includes forming one or more stiffening structure assembly(ies) comprising fiber and thermoset resin (step 152), stacking a plurality of first plies, comprising fiber and thermoset resin, to a desired thickness over a first tool (step 154). Method 150 further includes locating the stiffening structure assemblies over the first plies (step 156) and stacking a plurality of second plies, comprising fiber and thermoset resin, to a desired thickness over the stiffening structures to form a part layup (step 158). Method 150 further includes applying heat and pressure to the part layup (step 160). Step 160 may include curing the thermoset resin of the first plies, the thermoset resin of the stiffening structure assemblies, and the thermoset resin of the second plies. In this regard, step 160 may include heating the part layup to a temperature sufficient to melt the thermoset resin of the first plies, the thermoset resin of the stiffening structure assemblies, and the thermoset resin of the second plies and then cooling the part layup. After cooling, the thermoset resin of the first plies, the thermoset resin of the stiffening structure assemblies, and the thermoset resin of the second plies are bonded together (e.g., crosslinked). In this regard, after curing, the resin of one ply/layer may be indistinguishable from the resin of the adjacent ply/layer. After curing the thermoset resin of the first plies, stiffening structure assemblies, and the second plies, the mandrels, described in further detail below, may be removed from the stiffening structure assemblies (step 162).

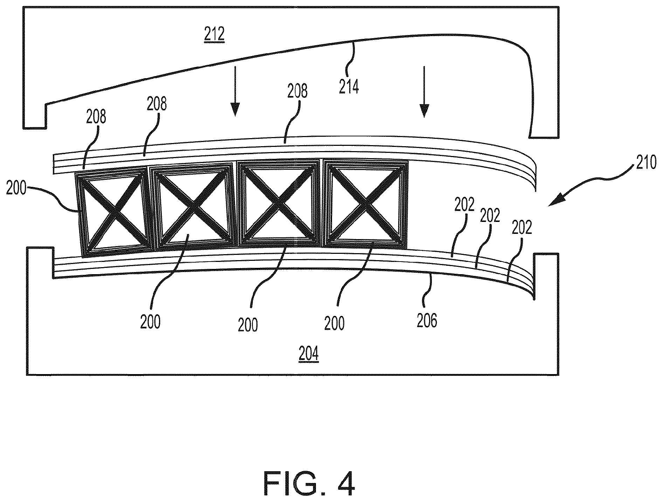

With combined reference to FIG. 3 and FIG. 4, step 152 may include forming stiffening structure assemblies 200, as described in further detail below. Step 154 may include stacking a plurality of first plies 202 over a first mold tool 204. First plies 202 may located over first mold tool 204 using any suitable deposition process. First plies 202 may be stacked on a first mold surface 206 of first mold tool 204. In various embodiments, each first ply 202 comprises a fiber sheet pre-impregnated with a thermoset resin. However, it is contemplated that various types of fiber and/or thermoset resin sheets may be used to form first plies 202. For example, the sheets may comprise pre-impregnated fibers and/or sheets of fibers interleaved with sheets of thermoset resin, among others. While three first plies 202 are illustrated, it is contemplated and understood that any number (one, five, ten, fifty, etc.) of first plies 202 may be stacked.

Step 156 may include locating stiffening structure assemblies 200 over first plies 202. In this regard, first plies 202 are located between first mold surface 206 and stiffening structure assemblies 200. Step 158 may include stacking a plurality of second plies 208 over stiffening structure assemblies 200, thereby forming part layup 210. Stiffening structure assemblies 200 are located between first plies 202 and second plies 208. In various embodiments, each second ply 208 comprises a fiber sheet pre-impregnated with a thermoset resin. However, it is contemplated that various types of fiber and/or thermoset resin sheets may be used to form second plies 208. For example, the sheets may comprise pre-impregnated fibers and/or sheets of fibers interleaved with sheets of thermoset resin, among others. While three second plies 208 are illustrated, it is contemplated and understood that any number (one, five, ten, fifty, etc.) of second plies 208 may be stacked.

In accordance with various embodiments, part layup 210 includes first plies 202, stiffening structure assemblies 200, and second plies 208. Step 160 may include curing part layup 210. For example, a second mold tool 212 may be located over part layup 210. A second mold surface 214 of second tool may be brought into contact with second plies 208. First and second mold tools 204, 212 may be configured for use in an RPM process/operation. In various embodiments, step 160 may include heating first and second mold tools 204 212 to heat part layup 210 to a temperature sufficient to melt the thermoset resin of each of first plies 202, stiffening structure assemblies 200, and second plies 208. Addition resin may be injected between first mold tool 204 and second mold tool 212 during the RPM process. The injected resin applies pressure and/or increases a pressure applied to part layup 210. During step 160, the thermoset resin of each of the first plies 202, the stiffening structure assemblies 200, and the second plies 208 is melted and then cooled. Upon cooling, thermoset resin of the first plies 202 crosslinks/bonds with the thermoset resin of the adjacent first plies 202 and stiffening structure assemblies 200. Upon cooling, the thermoset resin of the stiffening structure assemblies 200 crosslinks/bonds with the thermoset resin of the of the adjacent first plies 202, stiffening structure assemblies 200, and second plies 208. Upon cooling, the thermoset resin of the second plies 208 crosslinks/bonds with the thermoset resin of the of the adjacent stiffening structure assemblies 200 and second plies 208. Stated differently, during step 160, fiber reinforced material of each of the first plies 202, the stiffening structure assemblies 200, and the second plies 208 is consolidated with the fiber reinforced material of the adjacent first ply 202, stiffening structure assembly 200, and/or second ply 208.

In various embodiments, after curing (e.g., after step 160), the mandrels of the stiffening structure assemblies 200, which are described in further detail below, are removed (step 162). In accordance with various embodiments, first plies 202 may form one of first skin 110 and second skin 112 in FIG. 2A, and second plies 208 may form the other of first skin 110 and second skin 112. First mold surface 206 may have a contour configured to form pressure side 120. Second mold surface 214 may have a contour configured to form suction side 118. In this regard, first mold surface 206 and second mold surface 214 may together form/define the contouring of control surface 100 (FIG. 2A).

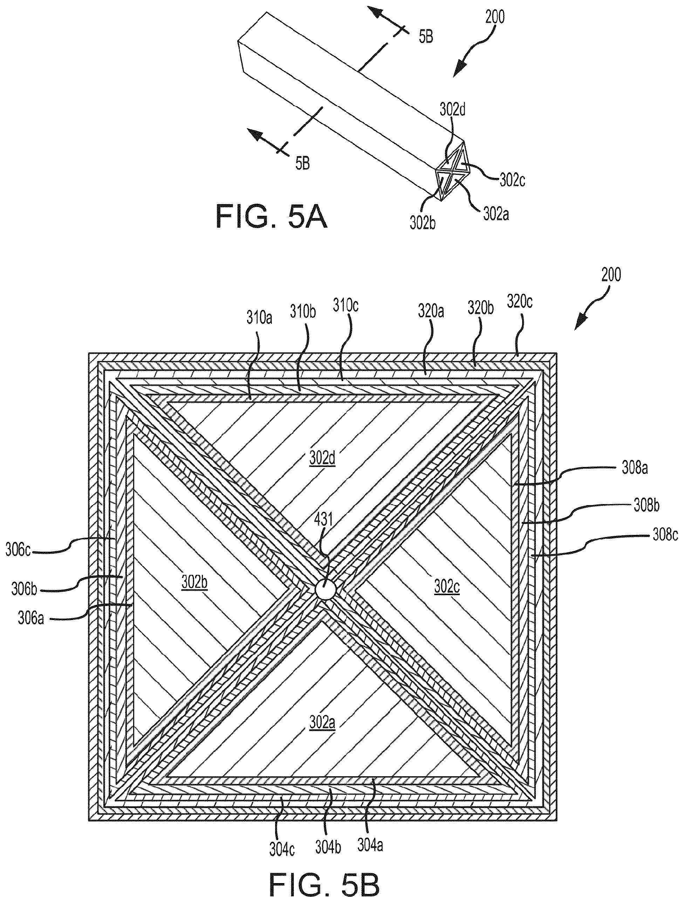

With reference to FIGs. 5A and 5B, a perspective view and a cross-section view, taken along the line 5B-5B in FIG. 5A, of a stiffening structure assembly 200 are illustrated, respectively. In accordance with various embodiments, stiffening structure assembly 200 may be employed to form one of the stiffening structures 114 in FIG. 2A. Stiffening structure assembly 200 includes a plurality of mandrels, such a first mandrel 302a, second mandrel 302b, third mandrel 302c, and fourth mandrel 302d (collectively mandrels 302). One or more inner fiber layer(s) (or inner fiber plies) is wrapped (e.g., separately) around each of first mandrel 302a, second mandrel 302b, third mandrel 302c, and fourth mandrel 302d. For example, first inner fiber plies 304a, 304b, and 304c (collectively first inner fiber plies 304) are located around and surround the perimeter of first mandrel 302a. Second inner fiber plies 306a, 306b, and 306c (collectively second inner fiber plies 306) are located around and surround the perimeter of second mandrel 302b. Third inner fiber plies 308a, 308b, and 308c (collectively third inner fiber plies 308) are located around and surround the perimeter of third mandrel 302c. Fourth inner fiber plies 310a, 310b, and 310c (collectively fourth inner fiber plies 310) are located around and surround the perimeter of fourth mandrel 302d. While FIG. 5B illustrates three inner fiber plies formed around each of first mandrel 302a, second mandrel 302b, third mandrel 302c, and fourth mandrel 302d, the present application is not limited in this manner. In this regard, any number (one, five, ten, fifty, etc.) of inner fiber plies may be formed around each of first mandrel 302a, second mandrel 302b, third mandrel 302c, and fourth mandrel 302d.

In accordance various embodiments, one or more outer fiber layer(s) (or outer fiber plies), such as first outer fiber ply 320a, second outer fiber ply 320b, and third outer fiber ply 320c (collectively outer fiber plies 320) is/are wrapped around first mandrel 302a, second mandrel 302b, third mandrel 302c, and fourth mandrel 302d collectively. First outer fiber ply 320a is located adjacent to the outermost inner fiber ply of each of first mandrel 302a, second mandrel 302b, third mandrel 302c, and fourth mandrel 302d. First outer fiber ply 320a is located on and/or contacts inner fiber plies 304c, 306c, 308c, 310c. Second outer fiber ply 320b is located around first outer fiber 320a (i.e., first outer fiber 320a is sandwiched between second outer fiber ply 320b and the outermost inner fiber ply of each of first mandrel 302a, second mandrel 302b, third mandrel 302c, and fourth mandrel 302d). Third outer fiber ply 320c is located around second outer fiber ply 320b (i.e., second outer fiber ply 320b is sandwiched between first outer fiber ply 320a and third outer fiber ply 320c). While FIG. 5B illustrates three outer fiber plies, the present application is not limited in this manner. In this regard, any number ( five, ten, fifty, etc.) of outer fiber plies 320 may be formed around first mandrel 302a, second mandrel 302b, third mandrel 302c, and fourth mandrel 302d collectively.

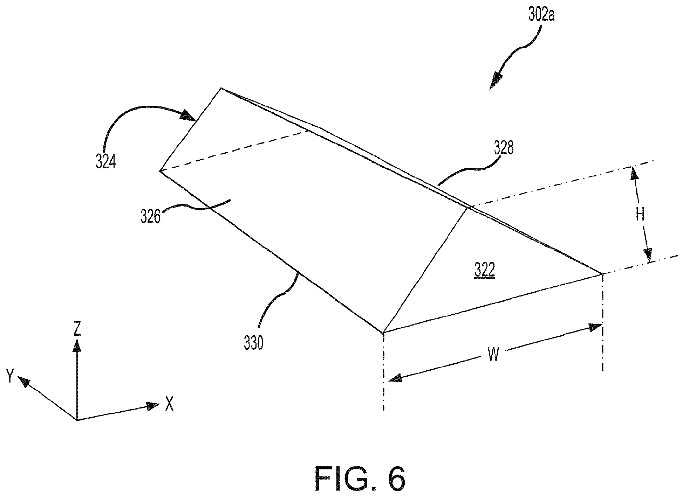

With reference to FIG. 6, first mandrel 302a is illustrated. While FIG. 6 shows first mandrel 302a, it is contemplated and understood that each of second mandrel 302b, third mandrel 302c, and fourth mandrel 302d may be similar to first mandrel 302a. First mandrel 302a may have a triangular prism shape. In this regard, a first mandrel face 322 and a second mandrel face 324 may each be a triangle, and first sidewall 326, second sidewall 328, and third sidewall 330 may each be generally rectangular (e.g., a quadrilateral). Stated differently, first mandrel 302a has a triangle cross-section taken in a first plane (e.g., the X-Z plane) and a quadrilateral cross-section taken in a second plane, normal to the first plane (e.g., in the Y-Z and Y-X planes). In various embodiment, a height H and/or a width W of first mandrel 302a may decrease between first mandrel face 322 and second mandrel face 324. This may allow for first mandrel 302a to be easily removed after curing (e.g., the removal of step 162 occurs after the curing of step 160 of method 150 in FIG. 3). In various embodiments, first mandrel 302a may be formed of a metallic material (e.g., a metal or metal alloy) such as aluminum, stainless steel, titanium, nickel-based alloy, etc. The metallic material may thermally expand during curing of the part layup (e.g., during step 160), the thermal expansion applying an outward force to the fiber plies (e.g., forces the fiber plies toward the mold surfaces.

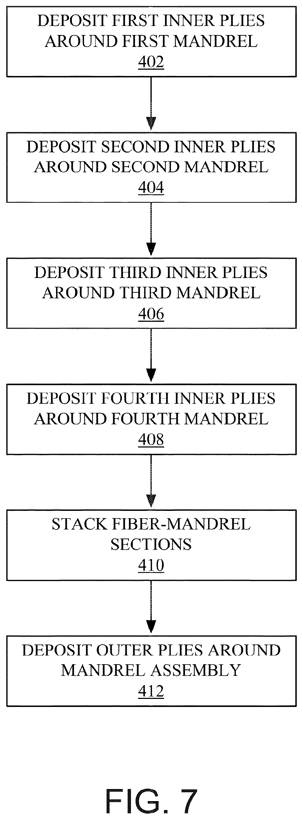

With reference to FIG. 7, a method 400 for forming a stiffening structure assembly, such as stiffening structure assembly 200 in FIGs. 5A and 5B, is illustrated. In accordance with various embodiments, method 400 includes depositing one or more first inner fiber ply(ies) around a first mandrel to form a first fiber-mandrel section (step 402), depositing one or more second inner fiber ply(ies) around a second mandrel to form a second fiber-mandrel section (step 404), depositing one or more third inner fiber ply(ies) around a third mandrel to form a third fiber-mandrel section (step 406) and depositing one or more fourth inner fiber ply(ies) around a fourth mandrel to form a fourth fiber-mandrel section (step 408). Method 400 may further include locating each of the second, third, and fourth fiber-mandrel sections over the first fiber-mandrel section (step 410) to form a fiber-mandrel assembly and depositing one or more outer fiber ply(ies) around the fiber-mandrel assembly (step 412).

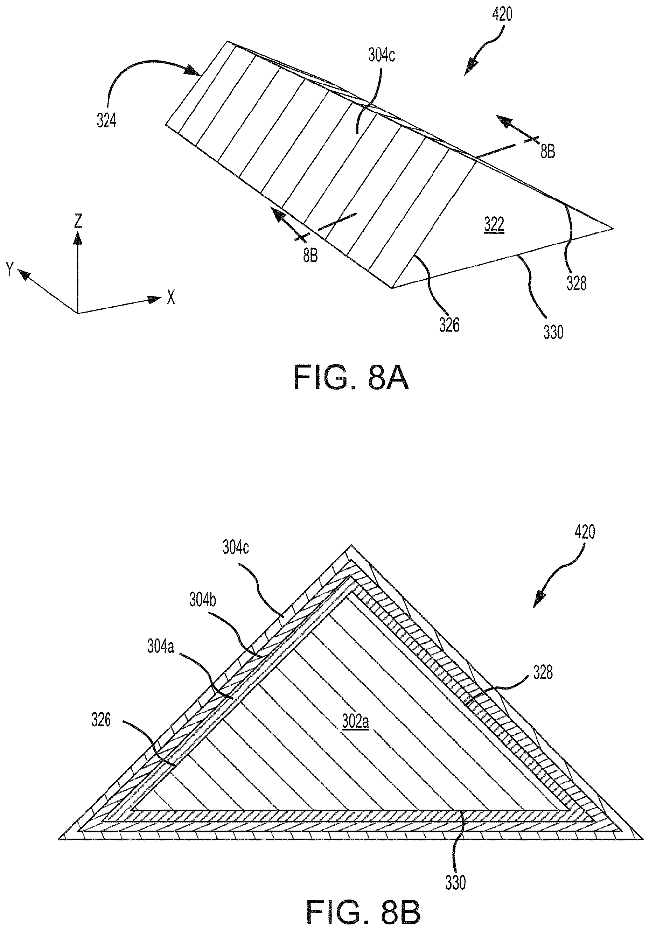

With reference to FIG. 7 and FIGs. 8A and 8B, step 402 may include depositing first inner fiber plies 304a, 304b, 304c around first mandrel 302a to form a first fiber-mandrel section 420. In various embodiments, first inner fiber plies 304a, 304b, 304c may be utilized to deposited using AFP. However, the disclosure is not limited in this regard, and other fiber deposition operations (e.g., hand layup) may be employed to deposit the inner fiber plies 304a, 304b, 304c about first mandrel 302a. First inner fiber plies 304a, 304b, 304c may be deposited over first, second, and third sidewalls 326, 328, 330 of first mandrel 302a. In various embodiments, each of first inner fiber ply 304a, 304b, 304c may extend continuously about first, second, and third sidewalls 326, 328, 330. First inner fiber ply 304a may be located on (e.g., in contact with) first, second, and third sidewalls 326, 328, 330. First inner fiber ply 304b is located on first inner fiber ply 304a. First inner fiber ply 304c is located on first inner fiber ply 304c. First inner fiber ply 304c may form the outermost inner ply of first fiber-mandrel section 420.

In various embodiments, first inner fiber plies 304a, 304b, 304c may be part of one continuous fiber strip/fiber sheet. In this regard, inner fiber ply 304a may be applied by beginning the wrapping of inner fiber ply 304a around first, second, and third sidewalls 326, 328, 330 proximate first mandrel face 322 and proceeding with wrapping inner fiber ply 304a around first, second, and third sidewalls 326, 328, 330 in a direction toward second mandrel face 324. Inner fiber ply 304b is then deposited over inner fiber ply 304a by beginning the wrapping of inner fiber ply 304b over first, second, and third sidewalls 326, 328, 330 (and inner fiber ply 304a) proximate second mandrel face 324 and proceeding towards first mandrel face 322 while wrapping first inner fiber ply layer 304b around first, second, and third sidewalls 326, 328, 330. Inner fiber ply layer 304c is then deposited over inner fiber ply layer 304b by beginning the wrapping of inner fiber layer 304c over first, second, and third sidewalls 326, 328, 330 (and inner fiber ply layer 304b) proximate first mandrel face 322 and proceeding towards second mandrel face 324 while wrapping inner fiber ply 304c around first, second, and third sidewalls 326, 328, 330. In various embodiments, first inner fiber ply 304a may be discrete from (e.g., non-continuous with) first inner fiber layer 304b and first inner fiber layer 304c. In various embodiments, the fiber angles may be varied along first mandrel 302a. For example, the angle of the fibers located proximate first mandrel face 322 may be different from the angle of the fibers located proximate second mandrel face 324. In various embodiments, the angle of the fibers formed on first sidewall 326 may be different from the angle of the fibers located on second sidewall 328 and/or on third sidewall 330. In this regard, the orientation of the fibers of first inner fiber plies 304a, 304b, 304c may be selected to tailor the stiffness and/or torsional strength of stiffening structure 114 (FIG. 2A).

First inner fiber plies 304a, 304b, 304c comprise a fiber sheet pre-impregnated with a thermoset resin. However, it is contemplated that various types of fiber and/or thermoset resin sheets may be used for first inner fiber plies 304. For example, the sheets may comprise pre-impregnated fibers and/or sheets of fibers interleaved with sheets of thermoset resin, among others. While FIG. 8B illustrates three first inner fiber plies formed around first mandrel 302a, the present application is not limited in this manner. In this regard, first fiber-mandrel section 420 may include any number (one, five, ten, fifty, etc.) of first inner fiber plies formed around first mandrel 302a.

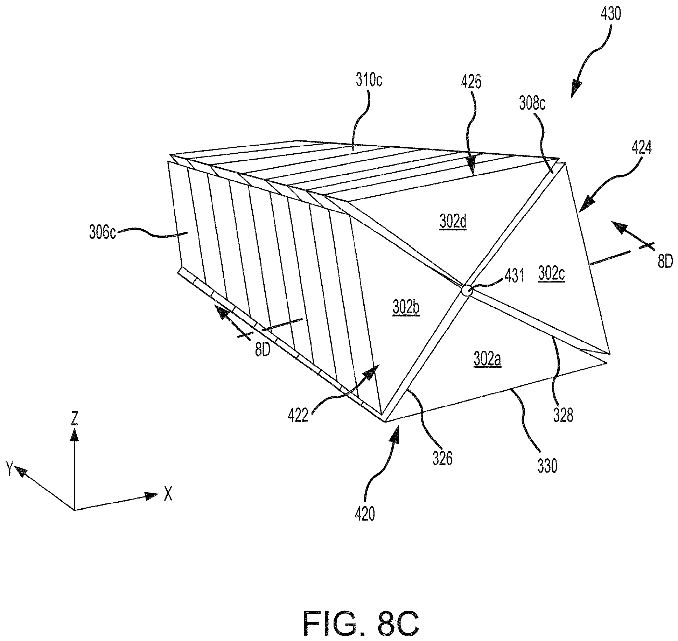

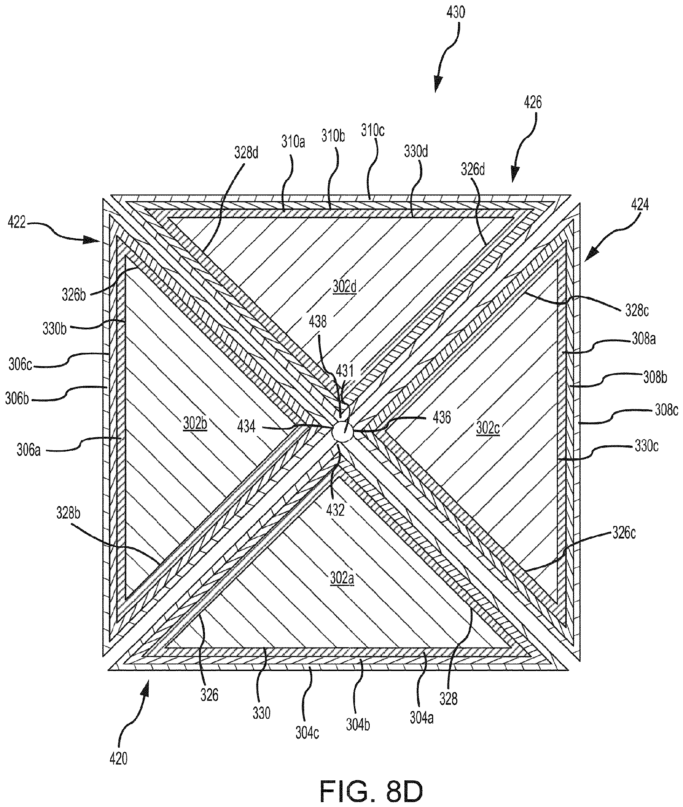

With reference to FIG. 7 and FIGs. 8C and 8D, step 404 may include depositing second inner fiber plies 306a, 306b, 306c around second mandrel 302b to form a second fiber-mandrel section 422. In this regard, step 404 may be similar to step 402, as described above. Step 406 may include depositing third inner fiber plies 308a, 308b, 308c around third mandrel 302c to form a third fiber-mandrel section 424. In this regard, step 406 may be similar to step 402, as described above. Step 408 may include depositing fourth inner fiber plies 310a, 310b, 310c around fourth mandrel 302d to form a fourth fiber-mandrel section 426. In this regard, step 408 may be similar to step 402, as described above.

Step 410 may include stacking second fiber-mandrel section 422, third fiber-mandrel section 424, and fourth fiber-mandrel section 426 over first fiber-mandrel section 420 to form a fiber-mandrel assembly 430. In this regard, fiber-mandrel assembly 430 includes first fiber-mandrel section 420, second fiber-mandrel section 422, third fiber-mandrel section 424, and fourth fiber-mandrel section 426.

Second sidewall 328b of second mandrel 302b is located on and oriented toward first sidewall 326 of first mandrel 302a. Second sidewall 328d of fourth mandrel 302d is located on and oriented toward first sidewall 326b of second mandrel 302b. First sidewall 326d of fourth mandrel 302d is located on and oriented toward second sidewall 328c of third mandrel 302c. First sidewall 326c of third mandrel 302c is located on and oriented toward second sidewall 328 of first mandrel 302a. First inner fiber plies 304a, 304b, 304c and second inner plies 306a, 306b, 306c may be sandwiched between second sidewall 328b of second mandrel 302b and first sidewall 326 of first mandrel 302a. Second inner plies 306a, 306b, 306c and fourth inner plies 310a, 301b, 310c may be sandwiched between first sidewall 326b of second mandrel 302b and second sidewall 328d of fourth mandrel 302d. Third inner plies 308a, 308b, 308c and fourth inner plies 310a, 310b, 310c may be sandwiched between first sidewall 326d of fourth mandrel 302d and second sidewall 328c of third mandrel 302c. Third inner plies 308a, 308b, 308c and first inner fiber plies 304a, 304b, 304c may be sandwiched between first sidewall 326c of third mandrel 302c and second sidewall 328 of first mandrel 302a. The outermost first inner fiber layer 304c of first fiber-mandrel section 420 may be adjacent to the outermost second inner fiber layer 306c of second fiber-mandrel section 422 and the outermost third inner fiber layer 308c of third fiber-mandrel section 424. The outermost fourth inner fiber layer 310c of fourth fiber-mandrel section 426 is adjacent to the outermost second inner fiber layer 306c of second fiber-mandrel section 422 and the outermost third inner fiber layer 308c of third fiber-mandrel section 424. The third sidewalls 330, 330b, 330c, 330d of first mandrel 302a, second mandrel 302b, third mandrel 302c, and fourth mandrel 302d, respectively, are oriented outward and form an outer mandrel perimeter. Stated differently, the first inner fiber ply 304c located on third sidewall 330, the second inner fiber ply 306c located on third sidewall 330b, the fourth inner fiber ply 310c located on third sidewall 330d and the third inner fiber ply 308c located on third sidewall 330c form an outer perimeter of fiber-mandrel assembly 430.

In accordance with various embodiments, a fiber bundle, or "noodle", 431 may be located at the center of fiber-mandrel assembly 430. In this regard, fiber bundle 431 may located between the apex 432 (first apex) of first fiber-mandrel section 420, the apex 434 (second apex) of second fiber-mandrel section 422, the apex 436 (third apex) of third fiber-mandrel section 424, and the apex 438 (fourth apex) of fourth fiber-mandrel section 426. Fiber bundle 431 may help to fill the void formed between first apex 432, second apex 434, third apex 436, and fourth apex 438.

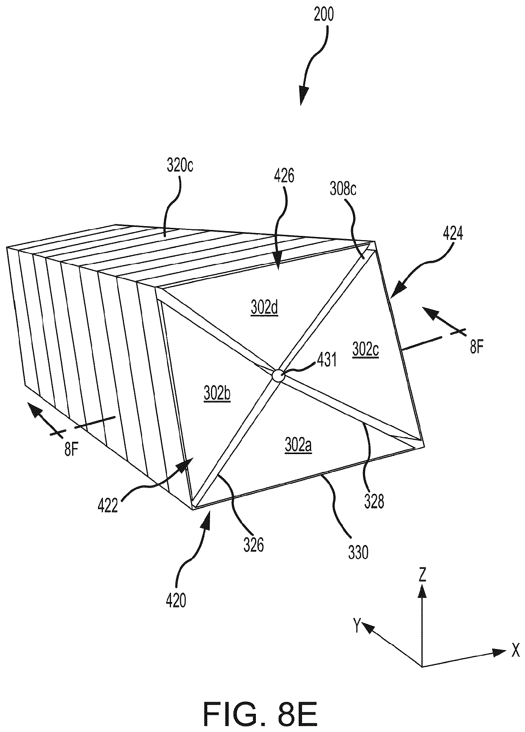

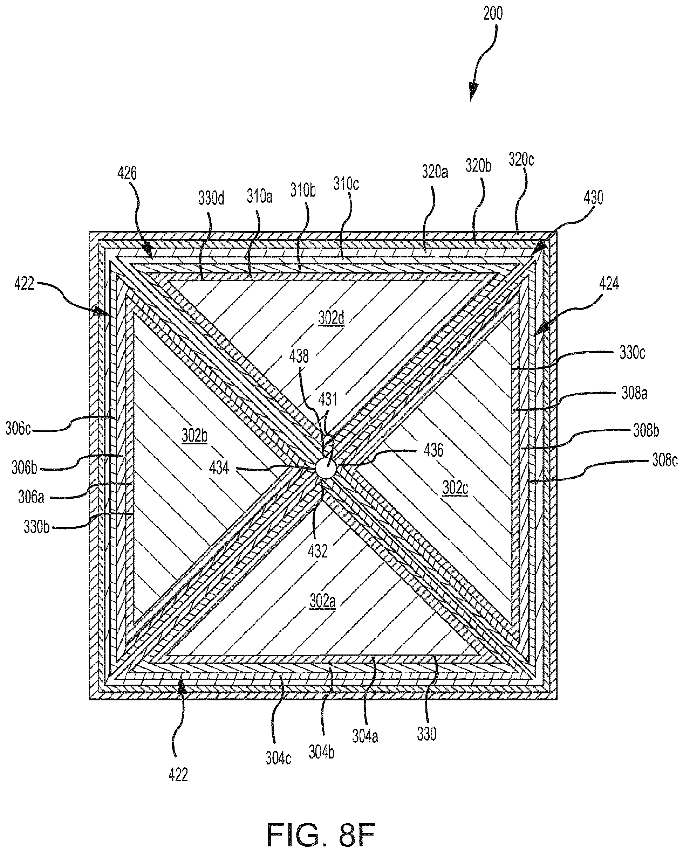

With additional reference to FIGs. 8E and 8F, step 412 may include depositing outer fiber plies 320a, 320b, 320c around the fiber-mandrel assembly 430 to form stiffening structure assembly 200. Stated differently, outer fiber plies 320a, 320b, 320c are deposited adjacent to and/or on the outermost inner fiber ply of each of first fiber-mandrel section 420, second fiber-mandrel section 422, third fiber-mandrel section 424, and fourth fiber-mandrel section 426. Outer fiber plies 320a, 320b, 320c may be deposited using AFP. However, the disclosure is not limited in this regard, and other fiber deposition operations (e.g., hand layup) may be employed to deposit the outer fiber plies 320a, 320b, 320c about the fiber-mandrel assembly 430. First outer fiber ply 320a may be deposited over and/or on the first inner fiber ply 304c located on third sidewall 330, the second inner fiber ply 306c located on third sidewall 330b, the fourth inner fiber ply 310c located on third sidewall 330d, and the third inner fiber ply 308c located on third sidewall 330c. Second outer fiber ply 320b may be deposited on first outer fiber ply 320a. Third outer fiber ply 320c may be deposited on second outer fiber ply 320b. Outer fiber plies 320a, 320b 320c may each comprise a fiber sheet pre-impregnated with a thermoset resin. However, it is contemplated that various types of fiber and/or thermoset resin sheets may be used to form outer fiber plies 320a, 320b 320c. For example, the sheets may comprise pre-impregnated fibers and/or sheets of fibers interleaved with sheets of thermoset resin, among others. In various embodiments, outer fiber plies 320a, 320b 320c may comprise a continuous fiber strip.

In accordance with various embodiments, the inner fiber plies 304, 306, 308, 310 and outer fiber plies 320 are not formed on the mandrel faces 322, 324. This allows the first, second, third, and fourth mandrels 302a, 302b, 302c, 302d to be removed after the final part is cured (i.e., after step 160 of method 150 in FIG. 3). In this regard, the first mandrel face 322 and the second mandrel face 324 of each first, second, third, and fourth mandrels 302a, 302b, 302c, 302d is devoid of fiber plies.

## Claims

1. A method for forming a stiffening structure assembly (200) for making a fiber-reinforced control surface (100), comprising:
forming a plurality of fiber-mandrel sections (420, 422, 424, 426), wherein forming the plurality of fiber-mandrel sections (420, 422, 424, 426) comprises:
forming a first fiber-mandrel section (420), wherein forming the first fiber-mandrel section (420) comprises depositing a first inner fiber ply (304a-c) around a perimeter of a first mandrel (302a);
forming a second fiber-mandrel section (422), wherein forming the second fiber-mandrel section (422) comprises depositing a second inner fiber ply (306a-c) around a perimeter of a second mandrel (302b);
forming a third fiber-mandrel section (424), wherein forming the third fiber-mandrel section (424) comprises depositing a third inner fiber ply (308a-c) around a perimeter of a third mandrel (302c); and
forming a fourth fiber-mandrel section (426), wherein forming the fourth fiber-mandrel section (426) comprises depositing a fourth inner fiber ply (310a-c) around a perimeter of a fourth mandrel (302d);
stacking the plurality of fiber-mandrel sections (420, 422, 424, 426) to form a fiber-mandrel assembly (430);
locating a fiber bundle (431) in a void formed between a first apex (432) of the first fiber-mandrel section (420), a second apex (434) of the second fiber-mandrel section (422), a third apex (436) of the third fiber-mandrel section (424), and a fourth apex (438) of the fourth fiber-mandrel section (426), wherein a second sidewall (328b) of the second mandrel (302b) is oriented toward a first sidewall (326) of the first mandrel (302a), a second sidewall (328d) of the fourth mandrel (302d) is oriented toward a first sidewall (326b) of the second mandrel (302b), a first sidewall (326d) of the fourth mandrel (302d) is oriented toward a second sidewall (328c) of the third mandrel (302c), a first sidewall (326c) of the third mandrel (302c) is oriented toward a second sidewall (328) of first mandrel (302a), and third sidewalls (330, 330b, 330c, 330d) of the first mandrel (302a), the second mandrel (302b), the third mandrel (302c) and the fourth mandrel (302d), respectively, are oriented outward and form an outer mandrel perimeter;
depositing a first outer fiber ply (320a) adjacent to the outermost inner fiber ply of each of first mandrel (302a), second mandrel (302b), third mandrel (302c), and fourth mandrel (302d) such that the first outer fiber ply (320a) is located on and contacts the outermost inner fiber ply of each of first mandrel (302a), second mandrel (302b), third mandrel (302c), and fourth mandrel (302d); and
depositing a second outer fiber ply (320b) around a perimeter of the first outer fiber ply (320a) of the fiber-mandrel assembly (430).

2. The method of claim 1, wherein each of the first mandrel (302a), the second mandrel (302b), the third mandrel (302c), and the fourth mandrel (302d) has a triangular prism shape.

3. The method of claim 1 or 2, wherein at least one of a first height (H) or a first width (W) of the first mandrel (302a) as measured at a first mandrel face (322) of the first mandrel (302a) is less than a second height (H) or a second width (W) of the first mandrel (302a) as measured at a second mandrel face (324) of the first mandrel (302a).

4. A method for forming a fiber-reinforced control surface (100), comprising:
forming a part layup (210) over a first mold surface (206) by:
locating a first fiber ply (202) over the first mold surface (206);
locating a plurality of stiffening structure assemblies (200) formed by the method of claim 1, 2 or 3 over the first fiber ply (202); and
locating a second fiber ply (208) over the plurality of stiffening structure assemblies (200);
contacting the second fiber ply (208) with a second mold surface (214); and
curing the part layup (210) by applying heat and pressure to the part layup (210).

5. The method of claim 4, further comprising:
removing the first mandrel (302a), the second mandrel (302b), the third mandrel (302c), and the fourth mandrel (302d) from each stiffening structure assembly (200) of the plurality of stiffening structure assemblies (200) after curing the part layup (210).

6. The method of claim 4 or 5, wherein curing the part layup (210) by applying heat and pressure to the part layup (210) comprises:
crosslinking a first resin of the first fiber-mandrel section (420) with a second resin of the second fiber-mandrel section (422) and with a third resin of the third fiber-mandrel section (424);
crosslinking the second resin of the second fiber-mandrel section (422) with a fourth resin of the fourth fiber-mandrel section (426); and
crosslinking the fourth resin of the fourth fiber-mandrel section (426) with the third resin of the third fiber-mandrel section (424).

7. The method of claim 4, 5 or 6, wherein curing the part layup (210) by applying heat and pressure to the part layup (210) comprises heating the part layup (210) to a temperature sufficient to consolidate a first thermoset resin of the first fiber ply (202) with a second thermoset resin of the plurality of stiffening structure assemblies (200) and to consolidate the second thermoset resin of the plurality of stiffening structure assemblies (200) with a third thermoset resin of the second fiber ply (208).

## Patentansprüche

1. Verfahren zur Herstellung einer Versteifungsstrukturanordnung (200) zur Fertigung einer faserverstärkten Steuerfläche (100), umfassend:
Herstellen einer Vielzahl von Faserdornabschnitten (420, 422, 424, 426), wobei das Herstellen der Vielzahl von Faserdornabschnitten (420, 422, 424, 426) Folgendes umfasst:
Herstellen eines ersten Faserdornabschnitts (420), wobei das Herstellen des ersten Faserdornabschnitts (420) das Abscheiden einer ersten inneren Faserlage (304a-c) um einen Umfang eines ersten Dorns (302a) umfasst;
Herstellen eines zweiten Faserdornabschnitts (422), wobei das Herstellen des zweiten Faserdornabschnitts (422) das Abscheiden einer zweiten inneren Faserlage (306a-c) um einen Umfang eines zweiten Dorns (302b) umfasst;
Herstellen eines dritten Faserdornabschnitts (424), wobei das Herstellen des dritten Faserdornabschnitts (424) das Abscheiden einer dritten inneren Faserlage (308a-c) um einen Umfang eines dritten Dorns (302c) umfasst; und
Herstellen eines vierten Faserdornabschnitts (426), wobei das Herstellen des vierten Faserdornabschnitts (426) das Abscheiden einer vierten inneren Faserlage (310a-c) um einen Umfang eines vierten Dorns (302d) umfasst;
Stapeln der Vielzahl von Faserdornabschnitten (420, 422, 424, 426), um eine Faserdornanordnung (430) herzustellen;
Anordnen eines Faserbündels (431) in einem Hohlraum, der zwischen einer ersten Spitze (432) des ersten Faserdornabschnitts (420), einer zweiten Spitze (434) des zweiten Faserdornabschnitts (422), einer dritten Spitze (436) des dritten Faserdornabschnitts (424) und einer vierten Spitze (438) des vierten Faserdornabschnitts (426) hergestellt wird, wobei eine zweite Seitenwand (328b) des zweiten Dorns (302b) einer ersten Seitenwand (326) des ersten Dorns (302a) zugewandt ist, eine zweite Seitenwand (328d) des vierten Dorns (302d) einer ersten Seitenwand (326b) des zweiten Dorns (302b) zugewandt ist, eine erste Seitenwand (326d) des vierten Dorns (302d) einer zweiten Seitenwand (328c) des dritten Dorns (302c) zugewandt ist, eine erste Seitenwand (326c) des dritten Dorns (302c) einer zweiten Seitenwand (328) des ersten Dorns (302a) zugewandt ist und dritte Seitenwände (330, 330b, 330c, 330d) des ersten Dorns (302a), des zweiten Dorns (302b), des dritten Dorns (302c) und des vierten Dorns (302d) jeweils nach außen zugewandt sind und einen äußeren Dornumfang herstellen;
Abscheiden einer ersten äußeren Faserlage (320a) benachbart der äußersten inneren Faserlage jedes ersten Dorns (302a), zweiten Dorns (302b), dritten Dorns (302c) und vierten Dorns (302d), derart, dass die erste äußere Faserlage (320a) auf der äußersten inneren Faserlage jedes ersten Dorns (302a), zweiten Dorns (302b), dritten Dorns (302c) und vierten Dorns (302d) angeordnet ist und diese kontaktiert; und
Abscheiden einer zweiten äußeren Faserlage (320b) um einen Umfang der ersten äußeren Faserlage (320a) der Faserdornanordnung (430).

2. Verfahren nach Anspruch 1, wobei jeder der ersten Dorn (302a), der zweiten Dorn (302b), der dritten Dorn (302c) und der vierten Dorn (302d) eine dreieckige Prismenform aufweist.

3. Verfahren nach Anspruch 1 oder 2, wobei mindestens eine der ersten Höhe (H) oder der ersten Breite (W) des ersten Dorns (302a), wie an einer ersten Dornfläche (322) des ersten Dorns (302a) gemessen, kleiner ist als eine zweite Höhe (H) oder eine zweite Breite (W) des ersten Dorns (302a), wie an einer zweiten Dornfläche (324) des ersten Dorns (302a) gemessen.

4. Verfahren zur Herstellung einer faserverstärkten Steuerfläche (100), umfassend:
Herstellen eines Teileaufbaus (210) auf einer ersten Formfläche (206) durch:
Anordnen einer ersten Faserlage (202) auf der ersten Formfläche (206) ;
Anordnen einer Vielzahl von Versteifungsstrukturanordnungen (200), die durch das Verfahren nach Anspruch 1, 2 oder 3 hergestellt wurden, auf der ersten Faserlage (202); und
Anordnen einer zweiten Faserlage (208) auf der Vielzahl von Versteifungsstrukturanordnungen (200);
Kontaktieren der zweiten Faserlage (208) mit einer zweiten Formfläche (214); und
Aushärten des Teilaufbaus (210) durch Anwenden von Wärme und Druck auf den Teilaufbau (210).

5. Verfahren nach Anspruch 4, ferner umfassend:
Entfernen des ersten Dorns (302a), des zweiten Dorns (302b), des dritten Dorns (302c) und des vierten Dorns (302d) aus jeder Versteifungsstrukturanordnung (200) der Vielzahl von Versteifungsstrukturanordnungen (200) nach dem Aushärten des Teilaufbaus (210).

6. Verfahren nach Anspruch 4 oder 5, wobei das Aushärten des Teilaufbaus (210) durch Anwenden von Wärme und Druck auf den Teilaufbau (210) Folgendes umfasst:
Vernetzen eines ersten Harzes des ersten Faserdornabschnitts (420) mit einem zweiten Harz des zweiten Faserdornabschnitts (422) und mit einem dritten Harz des dritten Faserdornabschnitts (424) ;
Vernetzen des zweiten Harzes des zweiten Faserdornabschnitts (422) mit einem vierten Harz des vierten Faserdornabschnitts (426); und
Vernetzen des vierten Harzes des vierten Faserdornabschnitts (426) mit dem dritten Harz des dritten Faserdornabschnitts (424).

7. Verfahren nach Anspruch 4, 5 oder 6, wobei das Aushärten des Teilaufbaus (210) durch Aufbringen von Wärme und Druck auf den Teilaufbau (210) das Erhitzen des Teilaufbaus (210) auf eine Temperatur umfasst, die ausreicht, um ein erstes duroplastisches Harz der ersten Faserlage (202) mit einem zweiten duroplastischen Harz der Vielzahl von Versteifungsstrukturanordnungen (200) zu verfestigen und das zweite duroplastische Harz der Vielzahl von Versteifungsstrukturanordnungen (200) mit einem dritten duroplastischen Harz der zweiten Faserlage (208) zu verfestigen.

## Revendications

1. Procédé de formation d'un ensemble de structure de raidissement (200) destiné à la fabrication d'une surface de commande renforcée par des fibres (100), comprenant :
la formation d'une pluralité de sections de mandrin en fibres (420, 422, 424, 426), dans lequel la formation de la pluralité de sections de mandrin en fibres (420, 422, 424, 426) comprenant :
la formation d'une première section de mandrin en fibres (420), dans lequel la formation de la première section de mandrin en fibres (420) comprend le dépôt d'une première couche interne de fibres (304a-c) autour du périmètre d'un premier mandrin (302a) ;
la formation d'une deuxième section de mandrin en fibres (422), dans lequel la formation de la deuxième section de mandrin en fibres (422) comprend le dépôt d'une deuxième couche interne de fibres (306a-c) autour du périmètre d'un deuxième mandrin (302b) ;
la formation d'une troisième section de mandrin en fibres (424), dans lequel la formation de la troisième section de mandrin en fibres (424) comprend le dépôt d'une troisième couche interne de fibres (308a-c) autour du périmètre d'un troisième mandrin (302c) ; et
la formation d'une quatrième section de mandrin en fibres (426), dans lequel la formation de la quatrième section de mandrin en fibres (426) comprend le dépôt d'une quatrième couche interne de fibres (310a-c) autour du périmètre d'un quatrième mandrin (302d) ;
l'empilage de la pluralité de sections de mandrin en fibres (420, 422, 424, 426) afin de former un ensemble de mandrin en fibres (430) ;
le positionnement d'un faisceau de fibres (431) dans un espace vide formé entre un premier sommet (432) de la première section de mandrin en fibres (420), un deuxième sommet (434) de la deuxième section de mandrin en fibres (422), un troisième sommet (436) de la troisième section de mandrin en fibres (424) et un quatrième sommet (438) de la quatrième section de mandrin en fibres (426), dans lequel une deuxième paroi latérale (328b) du deuxième mandrin (302b) est orientée vers une première paroi latérale (326) du premier mandrin (302a), une deuxième paroi latérale (328d) du quatrième mandrin (302d) est orientée vers une première paroi latérale (326b) du deuxième mandrin (302b), une première paroi latérale (326d) du quatrième mandrin (302d) est orientée vers une deuxième paroi latérale (328c) du troisième mandrin (302c), une première paroi latérale (326c) du troisième mandrin (302c) est orientée vers une deuxième paroi latérale (328) du premier mandrin (302a), et les troisièmes parois latérales (330, 330b, 330c, 330d) du premier mandrin (302a), du deuxième mandrin (302b), du troisième mandrin (302c) et du quatrième mandrin (302d), respectivement, sont orientées vers l'extérieur et forment un périmètre externe de mandrin ;
le dépôt d'une première couche externe de fibres (320a) adjacente à la couche interne de fibres la plus externe de chacun des premier mandrin (302a), deuxième mandrin (302b), troisième mandrin (302c) et quatrième mandrin (302d), de manière à ce que la première couche externe de fibres (320a) soit disposée sur et en contact avec la couche interne de fibres la plus externe de chacun des premier mandrin (302a), deuxième mandrin (302b), troisième mandrin (302c) et quatrième mandrin (302d) ; et
le dépôt d'une deuxième couche externe de fibres (320b) autour du périmètre de la première couche externe de fibres (320a) de l'ensemble de mandrin en fibres (430).

2. Procédé selon la revendication 1, dans lequel chacun des premier mandrin (302a), deuxième mandrin (302b), troisième mandrin (302c) et quatrième mandrin (302d) présente une forme de prisme triangulaire.

3. Procédé selon l'une quelconque des revendications 1 ou 2, dans lequel au moins l'une parmi une première hauteur (H) ou une première largeur (W) du premier mandrin (302a), telle que mesurée sur une première face de mandrin (322) du premier mandrin (302a), est inférieure à une deuxième hauteur (H) ou une deuxième largeur (W) du premier mandrin (302a), telle que mesurée sur une deuxième face de mandrin (324) du premier mandrin (302a).

4. Procédé de formation d'une surface de commande renforcée par des fibres (100), comprenant :
la formation d'un empilement de pièce (210) sur une première surface de moule (206) par :
la disposition d'une première couche de fibres (202) sur la première surface de moule (206) ;
la disposition d'une pluralité d'ensembles de structure de raidissement (200), formés par le procédé selon l'une quelconque des revendications 1, 2 ou 3, sur la première couche de fibres (202) ; et
la disposition d'une deuxième couche de fibres (208) sur la pluralité d'ensembles de structure de raidissement (200) ;
le contact de la deuxième couche de fibres (208) avec une deuxième surface de moule (214) ; et
la polymérisation de l'empilement de pièce (210) par application de chaleur et de pression à l'empilement (210).

5. Procédé selon la revendication 4, comprenant en outre :
le retrait du premier mandrin (302a), du deuxième mandrin (302b), du troisième mandrin (302c) et du quatrième mandrin (302d) de chaque ensemble de structure de raidissement (200) de la pluralité d'ensembles de structure de raidissement (200) après la polymérisation de l'empilement de pièce (210).

6. Procédé selon l'une quelconque des revendications 4 ou 5, dans lequel la polymérisation de l'empilement de pièce (210) par application de chaleur et de pression à l'empilement (210) comprend :
la réticulation d'une première résine de la première section de mandrin en fibres (420) avec une deuxième résine de la deuxième section de mandrin en fibres (422) et avec une troisième résine de la troisième section de mandrin en fibres (424) ;
la réticulation de la deuxième résine de la deuxième section de mandrin en fibres (422) avec une quatrième résine de la quatrième section de mandrin en fibres (426) ; et
la réticulation de la quatrième résine de la quatrième section de mandrin en fibres (426) avec la troisième résine de la troisième section de mandrin en fibres (424).

7. Procédé selon l'une quelconque des revendications 4, 5 ou 6, dans lequel la polymérisation de l'empilement de pièce (210) par application de chaleur et de pression à l'empilement (210) comprend le chauffage de l'empilement (210) à une température suffisante pour consolider une première résine thermodurcissable de la première couche de fibres (202) avec une deuxième résine thermodurcissable de la pluralité d'ensembles de structure de raidissement (200), et pour consolider la deuxième résine thermodurcissable de la pluralité d'ensembles de structure de raidissement (200) avec une troisième résine thermodurcissable de la deuxième couche de fibres (208).
